# EUROPEAN PATENT APPLICATION

(11) **EP 1 068 789 A2**
(43) Date of publication of application: **17.01.2001**
(21) Application number: 00114101.9
(22) Date of filing: 07.07.2000
(51) Int. Cl.: A01D 34/76

(54) **Lawnmower with wide field of action**

(30) Priority: 12.07.1999 IT RE990073
(71) Applicant: Fantini S.r.l., 46046 Medole (Prov. of Mantova) (IT)
(72) Inventor: Setti, Luca, 42046 Reggiolo (Reggio Emilia) (IT)
(74) Representative: Modiano, Guido, Dr.-Ing.

(57) **Abstract**

A lawn-mower (1) with a rotary blade (15), in which the axis of the at least one blade is in turn rotated by means of a rotating arm (13). The two rotary motions are actuated by the same motor shaft (20).

## Description

The present invention relates to a lawn-mower to be used in particular to tend large lawns and gardens without however limiting its use on uneven lawns also or on lawns, where there are plants or flower beds which require easy maneuverability of the machine.

Current commercially available lawn-mowers for use on large lawns and gardens and of the type which also allows to shred the cut grass so as to leave it on the ground (mulching) so as to convert it into fertilizer are generally constituted by a blade which rotates about a vertical axis, or by a plurality of mutually associated rotating blades which move parallel to the ground, are supported by an appropriate frame, and are moved by a tractor or towed on an appropriate trolley.

Said conventional rotary-blade machines, however, suffer drawbacks and limitations.

First of all, the cutting width is strictly dependent on the length of the rotating blade, i.e., on the diameter of the rotation circle of said blade, in the case of a single blade, or on the sum of said diameters when a plurality of blades are mutually associated so as to cooperate on a same machine.

This entails the absorption of high levels of mechanical power and the need to oversize the blade supporting elements, since the polar moment of inertia of the blade increases according to the square of the length of said blade and therefore the mechanical forces involved become very large.

In order to achieve good cutting quality, the peripheral velocity of the blade must in fact be high: this is achieved by means of a high angular velocity of said blade which, combined with the considerable length of the blade required by functional reasons, gives the rotating system a considerable amount of kinetic energy, which requires a heavy-duty, adequate sizing of all the fixed and rotating elements that support the blade.

Accordingly, conventional rotary-blade machines used to cut grass are heavy and require considerable mechanical power for their operation.

The aim of the present invention is to obtain a lawn-mower which allows a wide cutting width and, at the same time, requires limited mechanical power for its operation.

An object is to provide a machine whose supporting structure is light, and in any case maneuverable during operation, in relation to the obtainable cutting width.

These and other objects are achieved by the lawn-mower as stated in the appended claims.

In particular, the aim is achieved, according to the present invention, by providing a rotation axis for a blade (or for a plurality of blades) which also rotates about a central pivot, thus causing the rotation of the blade to become a planetary rotation around a central sun pivot.

The invention will become better apparent from the following detailed description of an example of application, given hereinafter with the aid of three drawings, wherein:
Figure 1 is a schematic plan view of a lawn-mower according to the invention, provided with two rotating blades;
Figure 2 is a side view of said machine, the arm that supports the rotation axes of the two blades being shown arranged at right angles;
Figure 3 is a view of the machine, with shown a detail of the motion transmission elements in a first constructive embodiment, which uses driving belts;
Figure 4 is a view of a detail of the motion transmission elements in a second embodiment, in which epicyclic gears are used for transmitting motion from the motor shaft to the shaft supporting arm and to the two rotating blades.

With reference to the above figures, 1 generally designates a lawn-mower executed according to the invention.

The reference numeral 2 designates a general supporting chassis, whereto a steering handle 3 with the corresponding handgrip 4 is connected; conventional elements for maneuvering the machine 1, not shown in the figure for the sake of simplicity, are installed on said handgrip 4.

The reference numeral 5 designates two pivoting wheels, i.e., wheels which can rotate freely under external actuation about the free pivots 5' supported by the chassis 2.

The reference numeral 6 designates two directional wheels which can be orientated, since they are guided by an arm 8 determining their rotational position on the pivot 7; the position of the arm 8 is determined by means of a main arm 9 by a rocker 10 which is moved by a pivot 11 which is actuated by the driver with trivial conventional means, not shown in the figure.

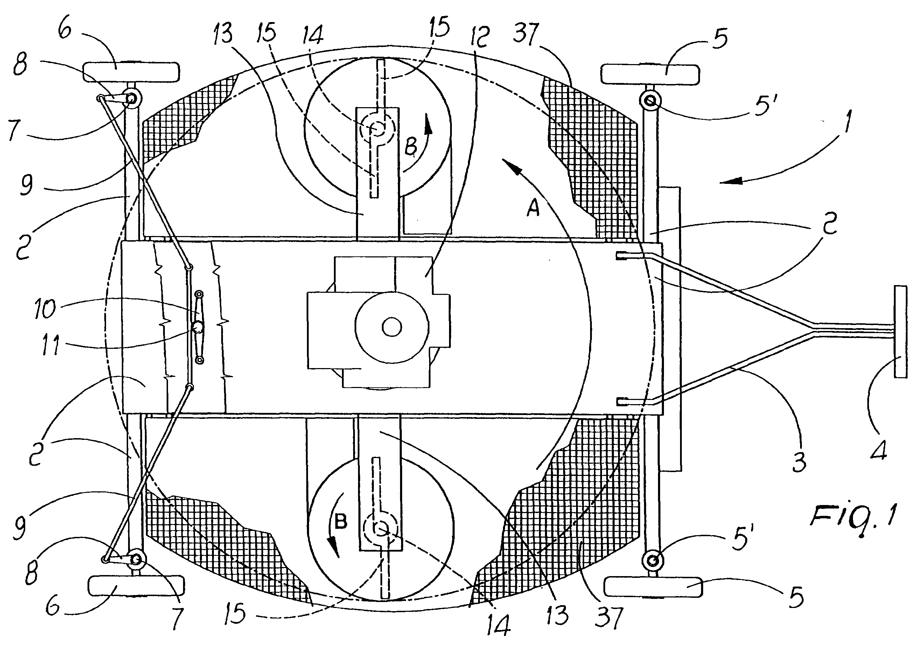

Substantially, depending on the position given to the rocker 10, the two wheels 6 are arranged either so that their axis is parallel to the axis of the steering handle 3 (as shown in Figure 1) or so that their axis is perpendicular to said steering handle: this allows the driver of the machine 1 to trace two kinds of straight path, at right angles to each other, and therefore to travel with a uniform motion over the lawn to be mowed.

The reference numeral 12 schematically designates an engine or motor, preferably of the internal-combustion type, as usually adopted in most of these machines.

The reference numeral 13 designates an arm which rotates about a vertical axis which is driven by the motor 12; two blades 15 are installed at the two ends of the arm 13, rotate about a vertical axis 14 and are both driven by the motor 12.

The reference numeral 16 schematically designates a housing for protecting the blade 15, which also facilitates, according to known technology, the shredding of the cut grass in order to leave it on the ground, acting as fertilizer.

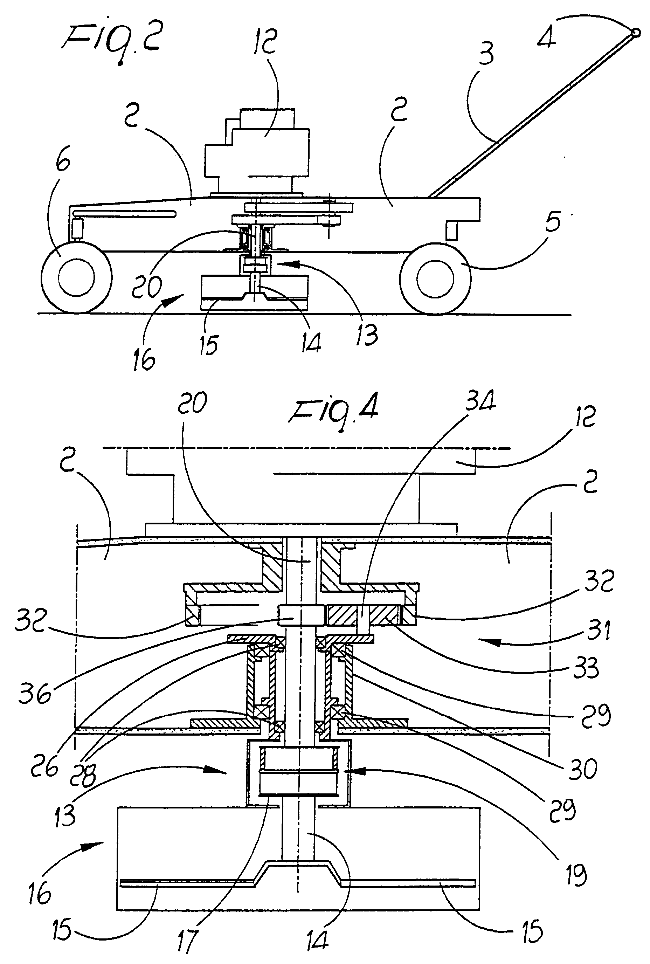

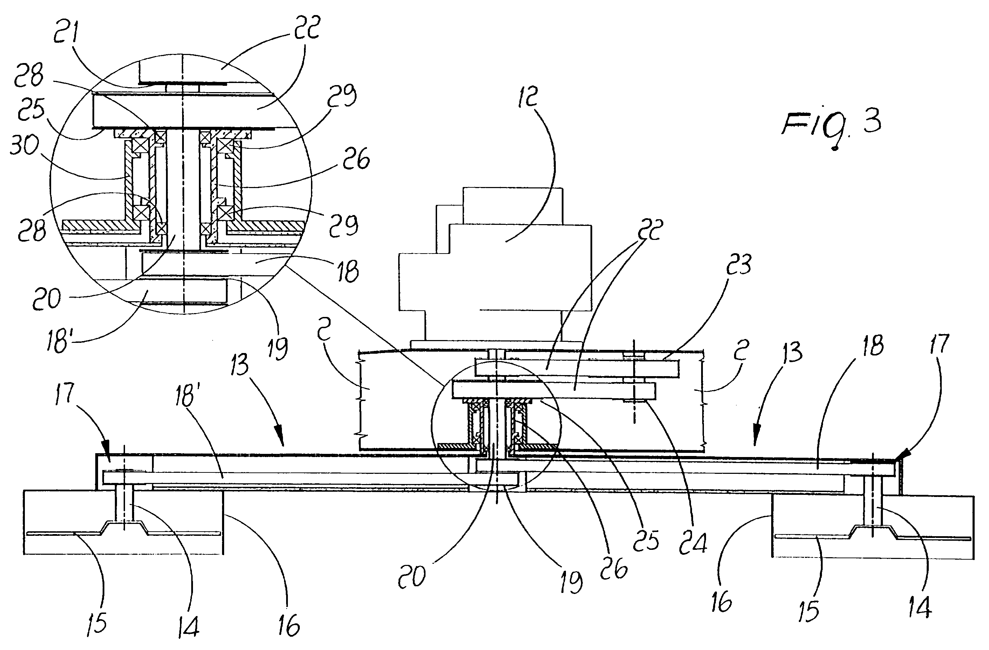

The transmission of the motion from the motor 12 to the rotating arm 13 and simultaneously to each one of the rotating blades 15 is shown in two examples of application, shown respectively in Figures 2 and 3 and in Figure 4. In any case, the rotary motion of the rotating arm 13, represented by the arrow "A", and the rotary motion of the blades 15, represented by the arrows "B", are equally orientated, i.e., both right-handed or both left-handed, so as to add the peripheral velocity of the blades 15.

Said velocity is in fact the vector sum of the peripheral velocity of each blade 15, i.e., ω₁r₁, where ω₁ is the angular velocity of the blade 15 and r₁ is its maximum radius, equal to half the length of the blade, and of the peripheral velocity of the rotating arm 13, which is also expressed by the formula ω_{b}r_{b}, where ω_{b} is the angular velocity of the arm 13 and r_{b} is the maximum distance of the arm from the rotation axis, i.e., from the motor shaft.

The methods for transmitting the motion from the motor shaft 20 to the rotating arm 13 and to the blades 15 are shown in a first example of application in Figure 2 and are shown in the detail of Figure 3.

The motor 12, which has a vertical axis 20, is fixed to the chassis 2 through means, not shown.

The rotary motion is transmitted to the axis 14 of each blade 15 by means of a belt 18 which engages a pulley 17 which is keyed on the shaft 14, the belt 18 engaging a double pulley 19 which is keyed to the motor shaft 20 and is also designed to move, with the belt 18', a second blade 15 which is installed on the opposite end of the rotating arm 13.

A second pulley 21 is also keyed on the motor shaft 20 and moves, by means of a suitable belt-produced reduction achieved by the kinematic chain of belts 22 and idler pulleys 23 and 24, the pulley 25, which is rigidly coupled to the rotating arm 13 by means of a slowly rotating flanged stub 26.

The dual coaxial motion system is supported by the fixed stub 30, which is rigidly coupled to the chassis 2, and turns on two pairs of bearings 28 and 29, the first pair being interposed between the motor shaft 20 and the slow stub 26, the second pair being interposed between the slow stub 26 and the fixed stub 30.

A second example of application achieves reduction of the motion in the transmission between the motor shaft 20 and the rotating arm 13 by means of an epicyclic gearing 31, without altering the transmission of motion to the blades 15.

In this example, shown in Figure 3, the ring gear 32 of an epicyclic gearing 31 is fixed to the chassis 2. A driving sun pinion 36 keyed on the motor shaft 20 moves a planet gear 33 whose pivot 34 is rigidly coupled to, and moves, the slow stub 26 associated with the rotating arm 13.

Finally, there is a protective barrier 37 for accident-prevention purposes.

Operation is as follows.

The starting of the motor 12 turns both the rotating arm 13 and each one of the two blades 15 arranged at the end of the rotating arm 13. This entails the sweeping, along a circular path, of a broad circular arc by the two rotating blades 15, the peripheral velocity of each blade being very high as is it the sum of the two peripheral velocities of the two combined circular motions.

A surprising consequence of this is a clean and effective cutting effect although the mechanical power to be applied to the system remains modest and the entire structure of the machine remains, as a whole, rather light, in relation to the wide cutting radius and to the cutting speed thus obtained.

The operator of the machine can travel in a regular fashion along straight paths in a front or transverse direction, according to the arrangement of the directional wheels 6 determined by the rocker 10.

The machine is shown, in the described examples, with two rotating blades installed, but as a variation it may be provided with a plurality of said blades, preferably one to four.

The system for transmitting the motion of the motor to the rotating shaft 13 and to the blades 15 may also be provided with friction elements (not shown in the figure), constituted for example by simple belt tensioning idler pulleys, which facilitate the starting of the machine and make its use smoother.

The disclosures in Italian Patent Application No. RE99A000073 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A rotary-blade lawn-mower, constituted by a main chassis (2) which is supported on wheel systems (5, 6), characterized in that it comprises at least one rotating blade (15) whose rotation axis is in turn installed on an arm (13) which in turn rotates about a central axis (20).

2. The lawn-mower according to claim 1, characterized in that the number of rotating blades (15) is between 1 and 4.

3. The lawn-mower according to claim 1, characterized in that the direction of rotation (A) of the rotating arm is identical to the direction of rotation (B) of the blade (15).

4. The lawn-mower according to claim 1, characterized in that one pair of wheels (5) is of the type that can freely pivot on freely rotating pivots (5').

5. The lawn-mower according to claim 1, characterized in that one pair of wheels (6) can be arranged at will with two alternative orientations, i.e., transversely to the steering handle (3) or parallel to said handle (3).

6. The lawn-mower according to claim 1, characterized in that a same motor shaft (20) is kinematically connected both to the rotating blade (15) and to the rotating arm (13) whereon the rotating blade (15) is installed.
